# EUROPÄISCHE PATENTANMELDUNG

(11) **EP 2 302 762 A2**
(43) Veröffentlichungstag der Anmeldung: **30.03.2011**
(21) Anmeldenummer: 10193294.5
(22) Anmeldetag: 30.06.2008
(51) Int. Cl.: H02K 5/04, H02K 5/14

(54) **Gehäuse mit wabenförmigen Verprägungen**

(30) Priorität: 01.02.2008 DE 102008007212
(62) Teilanmeldung aus: 08774534.5
(71) Anmelder: BSH Bosch und Siemens Hausgeräte GmbH, 81739 München (DE)
(72) Erfinder: Bott, Erich, 97618, Hollstadt (DE); Pecat, Herbert, 97633, Saal / Waltershausen (DE); Büttner, Maria, 97659, Schönau (DE); Reisenweber, Walter, 97638, Mellrichstadt (DE); Geiger, Thomas, 97616, Bad Neustadt (DE); Tripp, Thomas, 97654, Bastheim (DE); Kirchner, Andreas, 99867, Gotha (DE); Manger, Dieter, 97618, Wollbach (DE)

(57) **Zusammenfassung**

Ein Gehäuse (1) einer Komponente eines Haushaltsgeräts mit mindestens einer Wandung (2, 3) wobei Bereiche der Wandung (2, 3) mit wabenförmigen Verprägungen versehen sind. Die Wandung (2, 3) ist die eines Antriebs eines Haushaltsgeräts oder sie ist ein Deckel oder ein Staubraum des Haushaltsgeräts.

Durch die Erfindung kann ohne zusätzlichen Materialaufwand eine Versteifung des Gehäuses erreicht werden, insbesondere bei größeren, zum Verwölben neigenden Flächen. Vorteilhafterweise können die mehrdimensionale wölbstrukturenbildenden Verprägungen bereits in das Halbzeug des Gehäuses eingeformt werden, da sie einer späteren Umformung grundsätzlich nicht entgegenstehen.

## Beschreibung

### Beschreibung

### Hintergrund der Erfindung

Die Erfindung betrifft ein Gehäuse einer Komponente eines Haushaltsgeräts mit mindestens einer Wandung.

### Stand der Technik

Ein Gehäuse der eingangs genannten Art zur Aufnahme des Rotor eines elektrischen Antriebs für ein Haushaltsgerät wird in der Offenlegungsschrift DE 197 17 594 A1 offenbart. Das aus Stahlblech gepresste, topfförmige Gehäuse weist eine zylinderförmige radial Wandung sowie eine stirnseitige Wandung auf, wobei koaxial zum Zentrum der stirnseitigen Wandung eine nach außen ausgewölbte, domartige Verprägung vorgesehen ist. Diese nimmt bei der Montage des Haushaltsgeräts das Wälzlager des Rotors auf. Durch Öffnungen in der radiale Wandung hindurch sind ferner Bürstenanordnungen des Stators in Richtung des Rotors in das Gehäuse einschiebbar, welche von klammerartig nach innen ausgeformten Verprägungen in der stirnseitigen Wandung aufgenommen werden.

Derartige Gehäuse haben sich gut bewährt. Um eine hinsichtlich statischer Belastungen und Vibrationen ausreichende Festigkeit aufzuweisen, weist das zur Gehäusefertigung verwendete Stahlblech jedoch eine relativ große Dicke auf, die beispielsweise 1,25 mm betragen kann. Das Gehäuse ist wegen des hohen Materialeinsatzes vergleichsweise schwer und teuer.

Aus der Praxis ist ferner bekannt, die Gehäuse der elektrischen Antriebe von Haushaltsgeräten durch Spritzgießen von Kunststoffen auszuformen. Hierdurch wird zwar das Gewicht des Gehäuses reduziert, durch die schlechte Wärmeleitfähigkeit der Kunststoffe kann sich jedoch auch die Kühlung des elektrischen Antriebs verschlechtern. In Abhängigkeit von Art und Dimensionierung des Kunststoffs kann diese Maßnahme außerdem mit einer Festigkeitsabnahme einhergehen.

Die Offenlegungsschrift DE 196 28 883 A1 offenbart eine wabenförmige Dämpfungsplatte für eine Drehmaschine und ein Verfahren zur Herstellung der Dämpfungsplatte. Mit der Dämpfungsplatte kann die Strömungsmittelleckagemenge zwischen einem Drehkörper und einem stationären Teil reduziert und damit die Effizienz der Drehmaschine erhöht werden. Weiter kann sie abfedernd und/oder lagernd wirken, um eine Auslenkung des Drehkörpers zu verringern. Die Dämpfungsplatte kann z. B. an einem Pumpengehäuse angeordnet sein.

### Der Erfindung zugrundeliegende Aufgabe

Der Erfindung liegt die Aufgabe zugrunde, ein gattungsgemäßes Gehäuse eines Haushaltsgeräts derart auszubilden, dass bei geringem Gewicht und Materialeinsatz eine ausreichende Festigkeit und Kühlleistung bewirkt wird.

### Erfindungsgemäße Lösung

Die Aufgabe wird gelöst durch ein Gehäuse einer Komponente eines Haushaltsgeräts mit mindestens einer Wandung, wobei die Wandung die eines Antriebs des Haushaltsgeräts oder ein Deckel oder ein Staubraum des Haushaltsgeräts ist, und Bereiche der Wandung mit wabenförmigen Verprägungen versehen sind.

Die wabenartige Verprägung kann ohne zusätzlichen Materialaufwand zu einer Versteifung des Gehäuses beitragen, insbesondere bei größeren, zum Verwölben neigenden Flächen. Die mehrdimensionale Wölbstrukturen bildenden Verprägungen können bereits in das Halbzeug des Gehäuses eingeformt werden, da sie einer späteren Umformung grundsätzlich nicht entgegen stehen.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

In einer bevorzugten Ausführung der Erfindung ist das Gehäuse das eines Antriebs des Haushaltsgeräts und weist mindestens eine radiale und mindestens eine stirnseitige Wandung auf, wobei wenigstens eine erste Verprägung in der stirnseitigen Wandung kanalartig ausgebildet ist und sich zwischen einander gegenüber liegenden Bereichen des Umfangs der stirnseitigen Wandung erstreckt. Als kanalartig ist dabei jede Verprägung anzusehen, die sich von der stirnseitigen Wandung mit im Wesentlichen U-förmigem Querschnitt wegwölbt und eine im Verhältnis zur Breite der Verprägung vergrößerte Länge aufweist. Anders als bei den vorbekannten Verprägungen sind diese kanalartigen Verprägungen dazu geeignet, die stirnseitige Wandung des Gehäuses wirksam hinsichtlich der bei einem elektrischen Antrieb wirkenden Kräfte zu versteifen. Die Seitenflächen der ersten kanalartigen Verprägung bewirken dabei eine günstige Krafteinleitung in die radiale Wandung.

Durch diese Ausführung der Erfindung ist es möglich, die Menge des für das Gehäuse eingesetzten Materials zu reduzieren, was bei der Herstellung erhebliche Kostenvorteile bieten kann. Insbesondere kann die Wandstärke des Blechs reduziert werden, z.B. unter den Wert von 1 mm. Durch die Materialverringerung ist vorteilhaft eine Gewichtsreduzierung erreichbar, die unter Anderem Transportkosten senken und die Handhabbarkeit des Geräts durch den Anwender erleichtern kann. Die verbesserte Krafteinleitung ermöglicht es auch, Lüftungsöffnungen größer auszulegen, was insbesondere die Kühleigenschaften des Gehäuses verbessern und durch eine Verringerung des Luftwiderstands Strömungsgeräusche vorteilhaft reduzieren kann.

Mit Vorteil verläuft die erste kanalartige Verprägung in radialer Richtung durch das Zentrum der stirnseitigen Wandung, so dass im Bereich des Zentrums wirkende Belastungen wirksam in Richtung der radialen Wandung abgeleitet werden können. Die stirnseitige Wandung kann durch diese Ausbildung ferner eine relativ große Wölbfestigkeit und/oder Steifigkeit aufweisen.

Die erste kanalartige Verprägung ist vorzugsweise nach außen ausgewölbt ausgeformt, so dass das nutzbare Volumen des Gehäuses durch die erfindungsgemäße Ausbildung nicht verringert wird.

Mit besonderem Vorteil ist dabei vorgesehen, dass die erste kanalartige Verprägung in einander gegenüberliegende Ausnehmungen der radialen Wandung einmündet. Der Kraftfluss vom Zentrum der stirnseitigen Wandung zu der radialen Wandung wird hierdurch zwar geringfügig verlängert, die erste kanalartige Verprägung kann im Gegenzug jedoch zur Halterung von Bauteilen vorgesehen werden, welche durch die als Montageöffnungen ausgebildeten Ausnehmungen in das Gehäuse einsetzbar sind. Darüber hinaus kann die erste kanalartige Verprägung als Führung für den Kühlluftstrom wirken und diesen zum Rotor weg zu der radialen Wandung leiten. Die großflächig ausbildbaren Ausnehmungen können dabei als wirkungsvolle Luftaustrittsöffnungen dienen.

Die erste kanalartige Verprägung ist in einer bevorzugten Ausführung als Aufnahme für die Bürstenanordnungen des Antriebs ausgebildet, welche durch die Ausnehmungen hindurch in das Gehäuse einführbar sind. Gegenüber den vorbekannten klammerartigen Verprägungen ist das Einführen der Bürstenanordnungen bei Montage und Wartung des elektrischen Antriebs wegen der schienenartigen Führung erleichtert, ferner können die Bürstenanordnungen selber zur Versteifung der stirnseitigen Wandung genutzt werden.

Die Versteifung der stirnseitigen Wandung kann noch weiter dadurch erhöht werden, dass eine zweite kanalartige Verprägung, die gegenüber der ersten kanalartigen Verprägung um einen Winkel von vozugsweise mehr als 60°, besonders vorzugsweise um einen Winkel von im Wesentlichen 90°, verdreht ist, durch das Zentrum der stirnseitigen Wandung verläuft.

Nach einer weiteren bevorzugten Ausbildung der Erfindung weist das Gehäuse koaxial zum Zentrum der stirnseitigen Wandung eine nach außen weisende domartige Verprägung für die Aufnahme einer Lageranordnung des Antriebs auf, so dass der Integrationsgrad und das nutzbare Volumen des Gehäuses noch weiter erhöht werden. Dabei ist insbesondere vorgesehen, dass die Prägetiefe der domartigen Verprägung größer als die Prägetiefe der ersten und/oder zweiten kanalartigen Verprägung ausgebildet ist. Die Prägetiefe der domartigen Verprägung entspricht dabei beispielsweise mindestens der Breite der dort eingesetzten Lageranordnung, so dass diese vollständig außerhalb des eigentlichen Nutzvolumens des Gehäuses angeordnet ist und die Bürstenanordnung somit bereits unmittelbar unterhalb der stirnseitigen Wandung auf den Rotor wirken kann.

Zur Verbesserung des Kraftflusses von der domartigen Verprägung zum Umfang der radialen Wandung des Gehäuses hin können darüber hinaus weitere rampenartige Verprägungen vorgesehen sein, die von der Radialfläche der domartigen Verprägung zu den Basisflächen der ersten und/oder zweiten kanalartigen Verprägung verlaufen.

Bevorzugt ist ferner, dass beiderseits des Zentrums in die erste Verprägung der stirnseitigen Wandung Querprägungen eingelassen sind, welche diese querend im Wesentlichen rechtwinklig zur ersten Verprägung verlaufen. Diese Querprägungen können die erste kanalartige Verprägung versteifen und insbesondere der Stabilisierung der dort eingesetzten Bürstenanordnungen dienen.

Diese Ausbildung ist dann besonders wirkungsvoll, wenn die größte Prägetiefe der Querprägung größer als die Prägetiefe der ersten kanalartigen Verprägung ausgebildet ist, wobei die Prägetiefe der Querprägung beiderseits der ersten Verprägung rampenartig abnimmt.

Nach einer weiteren bevorzugten Ausbildung der Erfindung kann vorgesehen werden, dass von den Seitenflächen der zweiten Verprägung Schrägprägungen in der stirnseitigen Wandung schräg in Richtung des Umfangs abragen. Diese können radiale Schwingungen des Antriebs bereits dann wirkungsvoll kompensieren, wenn die Prägetiefe der Schrägprägungen umfangsfern der Prägetiefe der zweiten kanalartigen Verprägung entspricht.

Dabei ist mit Vorteil vorgesehen, dass die Prägetiefe der Schrägprägungen zum Umfang hin rampenartige abfallend ausgeführt ist. Hierdurch können Steifigkeitssprünge im Umfangsbereich der stirnseitigen Wandung vermieden werden.

Beiderseits des Zentrums können darüber hinaus Bohrungen in die Basisfläche der zweiten kanalartigen Verprägung eingelassen werden, welche der radialen Fixierung des Gehäuses in dem elektrischen Gerät dienen. Der Formschluss wird dabei vorzugsweise dadurch herbeigeführt, dass die Bohrungen jeweils mit einem nach außen weisenden Kragenzug ausgestattet sind.

Nach einer weiteren vorteilhaften Ausbildung der Erfindung weist die radiale Wandung des Gehäuses eine erste, sich zur stirnseitigen Wandung hin konisch verjüngende Radialfläche und eine sich daran anschließende, zylindrisch verlaufende Radialfläche auf. Der im Übergang zwischen zylindrischem und konischem Bereich entstehende Knick versteift das Gehäuse zusätzlich. Darüber hinaus können derart gestaltete Gehäuse nach der Fertigung für deren Transport teilweise ineinander geschachtelt werden, wodurch sich die Transportkosten verringern.

Mit besonderem Vorteil sind in der radiale Wandung, insbesondere im Bereich der sich konisch verjüngenden Radialfläche, weitere Lüftungsöffnungen vorgesehen, die insbesondere bei der der zuvor genannten konisch verjüngten Gehäuseausbildungen sehr großzügig ausgeführt werden können. Der Kraftfluss um die Lüftungsöffnungen und die Ausnehmungen für die Montage der Bürstenanordnungen herum kann in diesem Fall dadurch optimiert werden, dass in die sich konisch verjüngende Radialfläche Axialprägungen eingelassen sind.

In einer bevorzugten Ausführung des erfindungsgemäßen Gehäuses ist eine erste stirnseitige Wandung und/oder eine zweite stirnseitigen Wandung mit wabenförmigen Verprägungen versehen. Diese Strukturierung wirkt insbesondere an Gehäuseflächen eines elektrischen Antriebs geräuschmindernd, an welchen beim Betreiben des Antriebs der Kühlluftstrom entlang streicht oder welche in Schwingung geraten können. Die Kühlwirkung des Luftstroms verbessert sich dabei infolge vergrößerter wärmeabgebender Oberfläche.

Die zweite stirnseitige Wandung des Gehäuse ist nach einer bevorzugten Ausbildung der Erfindung deckelartig aufsetzbar ausgebildet und kann somit zur Montage oder Wartung des Ankers, seiner Lagerung oder des Stators abgenommen werden. Die zweite stirnseitige Wandung kann dabei auch einem Kragen des Gehäuses benachbart vorgesehen sein und an diesem befestigt werden.

Der Antrieb ist vorzugsweise der Antrieb eines Gebläses, z.B. des Gebläses eines Staubsaugers, insbesondere eines Haushaltsstaubsaugers.

### Kurzbeschreibung der Figuren

Die Erfindung wird im Folgenden anhand schematischer Zeichnungen an einem Ausführungsbeispiel mit weiteren Einzelheiten näher erläutert.

Es zeigen:
- Fig. 1:: ein nach dem Stand der Technik ausgebildetes Gehäuse für den Antrieb eines elektrischen Haushaltsgeräts;
- Fig. 2: ein Gehäuse für den Antrieb eines elektrischen Haushaltsgeräts nach einer n Ausbildung der Erfindung;
- Fig. 3: eine andere Ansicht des in Fig. 2 gezeigten Gehäuses;
- Fig. 4: einen Schnitt durch einen verprägten Wandungsbereich des Gehäuses nach Fig. 3 und 4.

### Ausführliche Beschreibung anhand eines Ausführungsbeispiels im Vergleich zum Stand der Technik

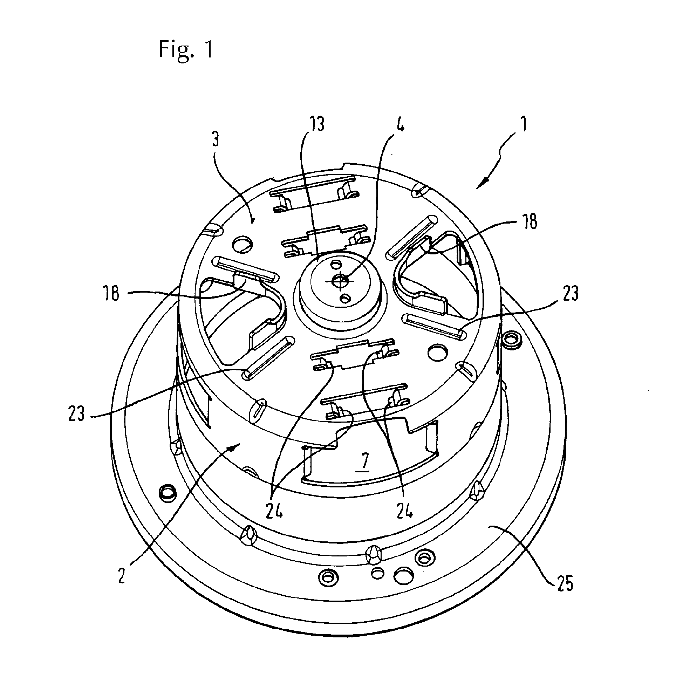

Zum Vergleich ist in Figur 1 ein dem Stand der Technik entsprechendes Gehäuse 1 aus einem Stahlblech von 1,25 mm Dicke gezeigt, dessen stirnseitige Wandung 3 bis auf die domartige Verprägung 13 zur Aufnahme eines Wälzlagers, partielle Kragenzüge 18 und mehrere schwach ausgeführte Verprägungen 23 im Wesentlichen plan ausgebildet ist. Im Bereich dieser ebenen Fläche sind ferner Klammern 24 zur Halterung einer hier nicht dargestellten Bürstenanordnungen vorgesehen. Die radiale Wandung 2 des Gehäuses 1 ist dabei zylindrisch ausgebildet und weist an ihrem offenen Ende einen ausgeprägten Kragen 25 auf.

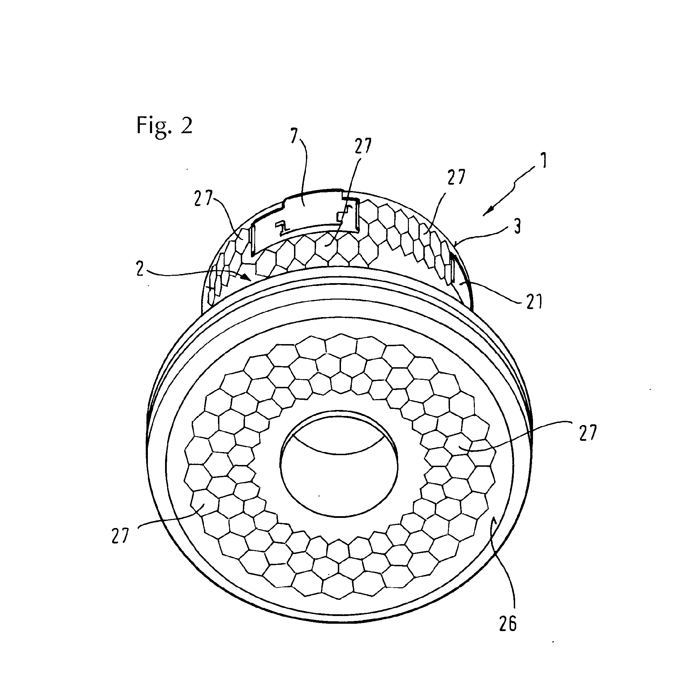

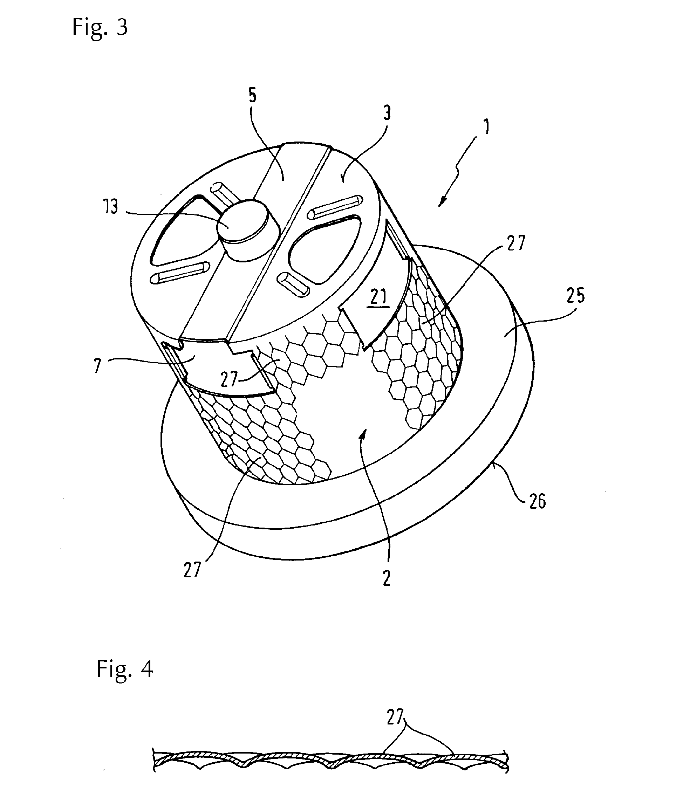

Bei dem in Fig. 2 und 3 gezeigten Gehäuse 1 für den Antrieb eines elektrischen Geräts ist neben der radialen Wandung 2 nicht nur eine erste stirnseitige Wandung 3, sondern dieser gegenüberliegend am anderen Abschluss der radialen Wandung 2 noch eine zweite stirnseitige Wandung 26 vorgesehen. Die zweite stirnseitige Wandung 26 erstreckt sich über den an die radiale Wandung 2 angeformten Kragen 25 hinweg und ist auf diesem lösbar verankert. Zur Montage oder Entnahme des elektrischen Antriebs kann die zweite stirnseitige Wandung 26 gelöst werden.

Um sowohl der zweite stirnseitige Wandung 26 als auch die radiale Wandung 2 zu versteifen und die Geräuschentwicklung durch die an diesen entlang streichende Kühlluft sowie durch Schwingungen zu verringern, sind die Wandungen 2, 26 örtlich mit wabenartigen, gewölbten Verprägungen 27 versehen, welche im Ausführungsbeispiel in Aufsicht sechseckig ausgeführt sind. In der radialen Wandung 2 sind die wabenartigen Verprägungen 27 insbesondere zwischen den Ausnehmungen 7 und den Lüftungsöffnungen 21 sowie zwischen diesen und dem Kragen 25 vorgesehen. Diese in Fig. 4 im Schnitt dargestellten mehrdimensionalen Wölbstrukturen führen bei geringer Wanddicke und niedrigem Gewicht zu einer hohen und darüber hinaus isotropen Biegesteifigkeit der verprägten Wandungsbereiche.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein. Darüber hinaus wird nicht nur die Geräuschentwicklung, sondern auch die Geräuschübertragung verringert.

### Bezugszeichen

- 1: Gehäuse
- 2: Wandung (radial)
- 3: Wandung (stirnseitig)
- 4: Zentrum (der stirnseitigen Wandung)
- 7: Ausnehmung
- 13: Verprägung (domartig)
- 18: Kragenzug
- 21: Lüftungsöffnung
- 23: Verprägung
- 24: Klammer
- 25: Kragen
- 26: Wandung (stirnseitig)
- 27: Verprägung (wabenartig)

## Patentansprüche

1. Gehäuse (1) einer Komponente eines Haushaltsgeräts, mit mindestens einer Wandung (2, 3), wobei die Wandung (2, 3) die eines Antriebs des Haushaltsgeräts oder ein Deckel oder ein Staubraum des Haushaltsgeräts ist, **dadurch gekennzeichnet, dass** Bereiche der Wandung (2, 3) mit wabenförmigen Verprägungen versehen sind.

2. Gehäuse (1) nach Anspruch 1, **dadurch gekennzeichnet, dass** die Wandung (2, 3) die eines Antriebs des Haushaltsgeräts ist.

3. Gehäuse (1) nach Anspruch 2, **dadurch gekennzeichnet, dass** es eine radiale Wandung (2) sowie mindestens einer ersten stirnseitigen Wandung (3), welche mit einer oder mehreren Verprägungen (5, 23) versehen ist, aufweist, wobei Bereiche der radialen Wandung (2), der ersten stirnseitigen Wandung (3) und/oder einer zweiten stirnseitigen Wandung (26) mit wabenförmigen Verprägungen (27) versehen sind.

4. Gehäuse (1) nach Anspruch 3, **dadurch gekennzeichnet, dass** die zweite Wandung (26) deckelartig aufsetzbar ausgebildet ist.

5. Gehäuse (1) nach Anspruch 3 oder 4, **dadurch gekennzeichnet, dass** die zweite stirnseitige Wandung (26) einem Kragen (25) des Gehäuses (1) benachbart vorgesehen ist.

6. Gehäuse nach einem der Ansprüche 2 bis 5, **dadurch gekennzeichnet, dass** beim Betreiben des Antriebs an den mit den Verprägungen (27) versehenen Bereichen der Wandung (2, 3) ein Kühlluftstrom entlangstreicht.

7. Gehäuse (1) nach Anspruch 1, **dadurch gekennzeichnet, dass** die Wandung (2, 3) ein Deckel oder eine Staubraumwand des Haushaltsgeräts ist.
